# EUROPEAN PATENT APPLICATION

(11) **EP 2 149 734 A1**
(43) Date of publication of application: **03.02.2010**
(21) Application number: 08752735.4
(22) Date of filing: 14.05.2008
(51) Int. Cl.: F16L 19/08, F25B 41/00

(54) **BITE TYPE PIPE COUPLING, REFRIGERATION DEVICE, AND WATER HEATING DEVICE**

(30) Priority: 18.05.2007 JP 2007133237
(71) Applicant: Daikin Industries, Ltd., Osaka 530-8323 (JP)
(72) Inventor: NAKATA, Haruo, Sakai-shi Osaka 591-8511 (JP); MURAYAMA, Yoshiki, Sakai-shi Osaka 591-8511 (JP); OHGAMI, Isao, Sakai-shi Osaka 591-8511 (JP); HARAGUCHI, Kazuya, Sakai-shi Osaka 591-8511 (JP)
(74) Representative: HOFFMANN EITLE
(86) International application number: PCT/JP2008/058864
(87) International publication number: WO 2008/143098

(57) **Abstract**

In a center portion of the coupling body of a bite type pipe coupling, an insertion port for receiving a connector pipe is formed at an end that faces a coupling member. In the center portion, an insertion port is formed at an end located opposite to the end that faces the coupling member. An apparatus-side pipe is inserted into and brazed to the insertion port. A thin wall portion is formed in an outer circumferential wall portion of the entrance of the insertion port for receiving the apparatus-side pipe. The outer diameter of the thin wall portion is smaller than that of the coupling body. The thin wall portion is formed in a range extending from the entrance of the insertion port to a position that is located closer to the entrance than the inner end of the insertion port and is located in the vicinity of the inner end.

## Description

### TECHNICAL FIELD

The present invention relates to a bite type pipe coupling, and a refrigeration device and a water heating device to which the coupling is applied. More particularly, the present invention relates to a bite type pipe coupling including a coupling body that is brazed to a pipe of an apparatus to which a connector pipe is connected.

### BACKGROUND ART

As pipe couplings used for fluid pipes through which fluid flows, demountable pipe couplings have been widely used so that pipes and fluid feed pipes can be easily replaced and repaired when deteriorated. Such pipe couplings include couplings having structures that vary widely depending on the intended use.

For example, flared type pipe couplings have been widely used in refrigeration cycle apparatuses such as air conditioners, in which refrigerant flows through fluid pipes. However, in the field of refrigeration cycle apparatuses, the types of refrigerants are now being changed in view of protection of the global environment. That is, chlorofluorocarbon, which has been used as refrigerant, is now being replaced by flammable HC refrigerants, such as propane, ethane, ethylene, n-pentane, n-butane, and isobutane, and by natural refrigerants such as carbon dioxide, the operating pressure of which is high. Therefore, because of the low leakage of refrigerant, bite type pipe couplings are now actively developed as pipe couplings for refrigeration cycle apparatuses using new refrigerants.

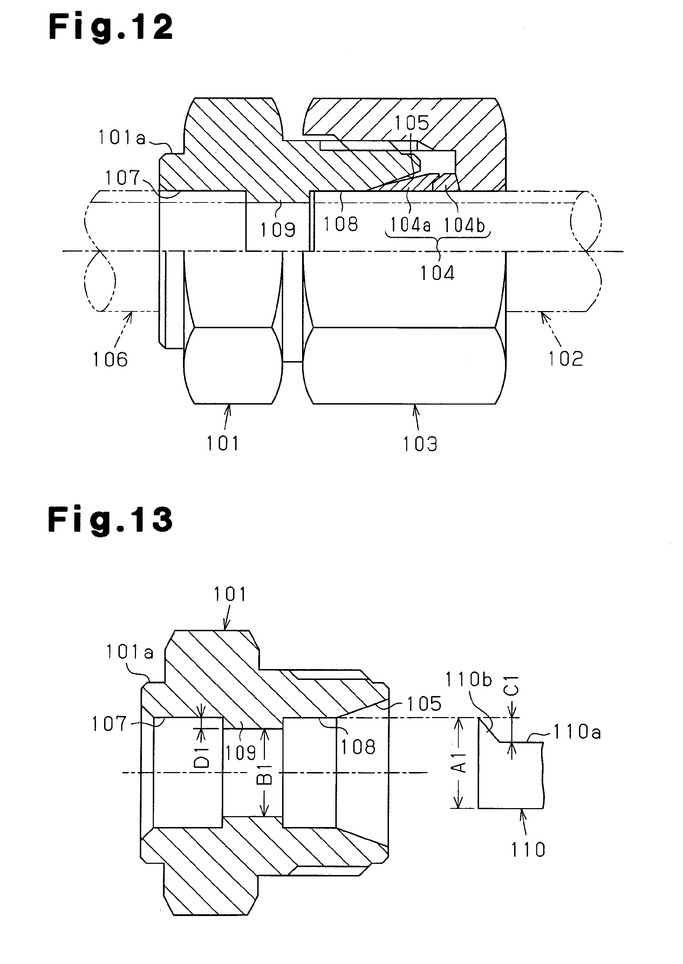

Patent Document 1 discloses one such bite type pipe coupling. The bite type pipe coupling is shown in Figs. 12 and 13.

As shown in Fig. 12, the bite type pipe coupling includes a coupling body 101 and a coupling member 103. The coupling body 101 is attached to an apparatus to which a connector pipe is connected. The coupling member 103 is arranged around the connector pipe 102 and coupled to the coupling body 101. The bite type pipe coupling also includes a ferrule 104 tightly held between the coupling body 101 and the coupling member 103, and a cam surface 105 that guides the tip end of the ferrule 104 to bite into a pipe. The ferrule 104 includes a front ferrule 104a and a back ferrule 104b. In a center portion of the coupling body 101, an insertion port 108 for receiving the connector pipe 102 is formed at an end that faces the coupling member 103. In the center portion of the coupling body 101, an insertion port 107 is formed at an end located opposite to the end that faces the coupling member 103. A pipe 106 of the apparatus is inserted into and brazed to the insertion port 107. A step 109 projecting radially inward is formed between the insertion ports 107 and 108. The distal end of the apparatus-side pipe 106 and the distal end of the connector pipe 102 contact the step 109 from both sides. The height of the step 109 is substantially the same as the thickness of the apparatus-side pipe 106 and the connector pipe 102.

Such a bite type pipe coupling is required in a case where an apparatus has no device such as a valve to which a bite type pipe coupling can be connected, but a bite type pipe coupling needs to be connected to the apparatus-side pipe 106, for example, in a case where a bite type pipe coupling is connected to the indoor unit of a separate type air conditioner.

In such a bite type pipe coupling, the step 109 restricts the attached position of the apparatus-side pipe 106 and the attached position of the connector pipe 102 to be connected to the coupling body 101. The step 109 also prevents flux used in brazing of the apparatus-side pipe 106 from scattering over sealing surfaces such as the insertion port 108 for the connector pipe 102 and the cam surface 105, which is continuous to the insertion port 108. Further, the step 109 prevents brazing filler metal used for connecting the apparatus-side pipe 106 from leaking into the insertion port 108.

To perform the brazing of the apparatus-side pipe 106 without trouble, a portion surrounding the insertion port 107 needs to be sufficiently heated, so that brazing filler metal flows all the way to the inner end of the insertion port for the apparatus-side pipe 106. Thus, a thin wall portion having a predetermined length needs to be formed in the outer circumference wall of the insertion port 107.
Patent Document 1: Japanese Laid-Open Patent Publication No. 2005-36947.

### DISCLOSURE OF THE INVENTION

Fig. 13 illustrates the coupling body 101 of the above described bite type pipe coupling. When forming the two insertion ports 107, 108 located in the center portion of the coupling body 101, it is often difficult to form these from the same direction. Thus, the insertion ports 107, 108 are formed through reaming from two directions. This extends the machining time and increases the costs. That is, to form the two insertion ports 107, 108 from the same direction, the insertion port located on the other side of the step 109 needs to be machine finished. The insertion port at the other side of the step 109 needs to be machine finished using a boring bar finishing tool 110 of which a tip 110b extends radially outward from a shank 110a.

The following three requirements must be satisfied to allow the boring bar finishing tool 110 to be used. That is, the inner diameter B1 of the step 109 is greater than the height A1 of the boring bar finishing tool 110. The height C1 of the tip of the boring bar finishing tool 110 is greater than the height D1 of the step 109. The shank 110a of the boring bar finishing tool 110 has a cross-sectional area to secure a strength withstanding machine finishing. However, when the diameter of a pipe is small, the inner diameter B1 of the step 109 is also small. This makes it hard for the three requirements to be satisfied. For example, in a case of a bite type pipe coupling for connecting a copper pipe having an outer diameter of 6.35 mm and a thickness of 0.8 mm, the inner diameter B1 of the step 109 is slightly less than the height A1 of the boring bar finishing tool 110. The boring bar finishing tool 110 therefore cannot be readily used.

In a conventional bite type pipe coupling, a thin wall portion 101a of the outer circumferential wall of the insertion port 107 is formed short at the entrance of the insertion port 107. Thus, strong brazing cannot be obtained.

Accordingly, it is an objective of the present invention to provide a bite type pipe coupling that permits an apparatus-side pipe to be brazed without trouble and permits an insertion port for receiving an apparatus-side pipe and an insertion port for receiving a connector pipe to be machine finished from a single direction of a coupling body. Another objective of the present invention is to provide a refrigeration device and a water heating device that use the bite type pipe coupling.

To achieve the foregoing objective and in accordance with one aspect of the present invention, a bite type pipe coupling including a coupling body, a coupling member, a ferrule, and a cam surface is provided. The coupling body is attached to an apparatus to which a connector pipe is connected. The coupling member is arranged around the connector pipe and coupled to the coupling body. The ferrule is tightly held between the coupling body and the coupling member. The cam surface causes a tip end of the ferrule to bite into the connector pipe. In a center portion of the coupling body, an insertion port for receiving the connector pipe is formed at an end that faces the coupling member. In the center portion, an insertion port is formed at an end located opposite to the end that faces the coupling member. An apparatus-side pipe is inserted into and brazed to the insertion port. A thin wall portion is formed in an outer circumferential wall portion of the entrance of the insertion port for receiving the apparatus-side pipe. The outer diameter of the thin wall portion is smaller than that of the coupling body. The thin wall portion is formed in a range extending from the entrance of the insertion port to a position that is located closer to the entrance than the inner end of the insertion port and is located in the vicinity of the inner end. In the present application, the vicinity of the inner end of the insertion port refers to a position where the distance from the inner end of the insertion port is shorter than the distance from the entrance of the insertion port.

This configuration allows the distal end of the apparatus-side pipe to be inserted so as to be aligned with the inner end position of the insertion port, so that the inner end of the thin portion at the outer circumference of the insertion port is located in the vicinity of the distal end of the inserted apparatus-side pipe. Therefore, unlike the conventional bite type pipe coupling, the thermal capacity of the wall of the insertion port is small in an area including the vicinity of the distal end of the apparatus-side pipe. As a result, when brazing is performed, brazing filler metal smoothly flows to the vicinity of the distal end of the apparatus-side pipe, which ensures a strong brazing.

Also, since the thin wall portion is formed in a range extending from the entrance of the insertion port to a position that is located closer to the entrance than the inner end of the insertion port and is located in the vicinity of the inner end, the step formed at the inner end of the insertion port for the apparatus-side pipe can have a decreased height or be omitted. Conventionally, it has been believed that a step needs to have a height equivalent to the thickness of a pipe in order to prevent the sealing of the connector pipe from being made difficult by brazing filler metal flowing into the insertion port of the coupling member and flux scattering onto the insertion port of the coupling member.

However, a study conducted by the inventors revealed that the thermal capacity of the wall in the vicinity of the inner end of the insertion port can be sharply increased by arranging the inner end of the thin wall portion closer to the entrance than the inner end of the insertion port and in the vicinity of the inner end, so that brazing filler metal is prevented from flowing in and the flux is prevented from scattering. It was revealed that, in the first aspect, since means for determining the position of a pipe is realized by means other than a step, a step having a height conventionally believed to be necessary can be omitted or the height of the step can be reduced. By reducing the height of the step or omitting the entire step, the insertion port for receiving the apparatus-side pipe and the insertion port for receiving the connector pipe can be machined from the same direction. This reduces costs.

In the above described aspect, the apparatus-side pipe and the connector pipe are preferably connected to the insertion ports by a predetermined insertion dimension by the means for determining the position of the connection. Since the connection positions are determined, the apparatus-side pipe is brazed without problem.

In the above aspect, a step is preferably formed on the inner circumferential surface of the coupling body between the insertion port for receiving the apparatus-side pipe and the insertion port for receiving the connector pipe, and the step projects radially inward so that the apparatus-side pipe and the connector pipe contact the step from both sides. In this case, the height between the step and the inner circumferential surface of each insertion port is smaller than the thickness of the pipe. Since a step having a small height serving as position determining means is formed, the positions of the apparatus-side pipe and the connector pipe are easily determined. By reducing the height of the step, the insertion ports are allowed to be machined from the same direction.

The height between the step and the inner circumferential surface of the insertion port is preferably between 0.1 mm to 0.5 mm. This range is optimal in view of, for example, the grinding dimensions of a boring bar finishing tool, the requirement of the height of the step in machining from one side, and the preservation of the functions of the step.

A pilot hole having the same diameter as the inner diameter of the step is preferably formed in the center portion of the coupling body prior to the machining of the insertion ports, and the insertion ports are formed by machine finishing the inner circumferential surface of the pilot hole using a boring bar finishing tool. In this case, the step is formed by a portion of the inner circumferential surface of the pilot hole that has not been subjected to the machine finishing by the boring bar finishing tool. In this configuration, the insertion ports are formed simply by machine finishing after the pilot hole is formed. Further, since the insertion ports are machine finished, the step having a small height can be formed without further machining. This allows reasonable machining procedure to be carried out, thereby reducing the costs.

The inner diameter of the step is preferably greater than the total height of the boring bar finishing tool including the shank and the tip. In this case, the height between the step and the inner circumferential surface of each insertion port is smaller than the height of the tip of the boring bar finishing tool. Further, the shank of the boring bar finishing tool has a cross-sectional area that secures a strength withstanding machine finishing using a boring bar tool. This configuration allows both insertion ports to be machined from the same direction.

A side surface of the step that faces the insertion port receiving the apparatus-side pipe is formed into an inclined surface of which the diameter increases toward the entrance of the insertion port. In this case, the side surface is formed into a shape that corresponds to the inclined surface of the tip of the boring bar finishing tool. This configuration facilitates the machining of the side surface.

A projection serving as position determining means is preferably formed on the outer circumference of the apparatus-side pipe. In this case, the bite type pipe coupling is configured such that the projection contacts the insertion port receiving the apparatus-side pipe so that the insertion dimension of the apparatus-side pipe becomes a predetermined dimension. This configuration eliminates the necessity for the step, which facilitates the machining. The position of the connector pipe is easily determined by causing the distal end of the connector pipe to contact the distal end of the apparatus-side pipe, which has been brazed in advance.

The apparatus-side pipe is preferably a copper pipe, and the connector pipe is preferably made of brass. This configuration allows the apparatus-side pipe and the coupling body to be brazed with a predetermined strength without trouble.

In accordance with a second aspect of the present invention, a refrigeration device is provided in which the above described bite type pipe coupling is used in a refrigeration circuit and in a water supply circuit. In accordance with a third aspect of the present invention, a water heating device is provided in which the above described bite type pipe coupling is used in a hot-water supply circuit and in a water supply circuit. These configurations reduce the costs of the refrigeration device and the water heating device.

### BRIEF DESCRIPTION OF THE DRAWINGS

Fig. 1 is a partial cross-sectional view of a bite type pipe coupling according to a first embodiment of the present invention, illustrating a state in which a ferrule contacts a cam surface after fastening is started;
Fig. 2 is a partial cross-sectional view of the bite type pipe coupling, illustrating a state in which fastening is completed;
Fig. 3 is a partial cross-sectional view illustrating the coupling body;
Fig. 4 is a partial cross-sectional view illustrating the coupling member;
Fig. 5 is an enlarged cross-sectional view illustrating the cam surface and its surroundings in the bite type pipe coupling;
Fig. 6 is an enlarged cross-sectional view illustrating the ferrule and its surroundings in the bite type pipe coupling;
Fig. 7 is a diagram of the ferrule and its surroundings, illustrating a procedure for connecting a pipe, with (a) showing a state in which the pipe is temporarily joined by the tip end of the ferrule, (b) showing a state in which the ferrule has been separated, and (c) showing a state in which the fastening is completed;
Fig. 8 is a diagram illustrating a machining procedure of the insertion port in the coupling body, with (a) showing a state of a pilot hole being machined, and (b) showing the insertion port for an apparatus-side pipe being machined;
Fig. 9 is a diagram showing a machining procedure of the insertion port in the coupling body, illustrating the machining process of the insertion port for the connector pipe;
Fig. 10 is a partial cross-sectional view illustrating a coupling body and its surroundings in a bite type pipe coupling according to a second embodiment of the present invention;
Fig. 11 is a partial cross-sectional view of a bite type pipe coupling according to a third embodiment of the present invention, illustrating a state in which fastening has been completed;
Fig. 12 is a partial cross-sectional view of a prior art bite type pipe coupling, illustrating a state in which a ferrule contacts a cam surface after fastening is started; and
Fig. 13 is a diagram showing a machining procedure of the insertion port in the coupling body.

### BEST MODE FOR CARRYING OUT THE INVENTION

Hereinafter, bite type pipe couplings according to embodiments of the present invention will be described with reference to the drawings. In the drawings of respective embodiments, like numerals are used for like elements throughout, and the explanations thereof are omitted or simplified in the second and subsequent embodiments.

### (First Embodiment)

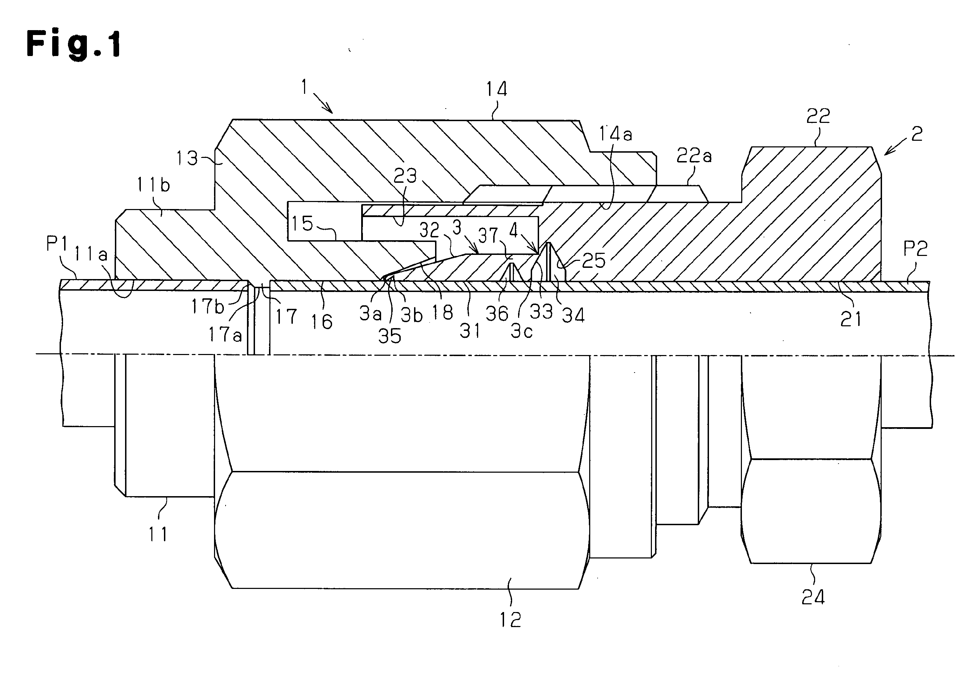

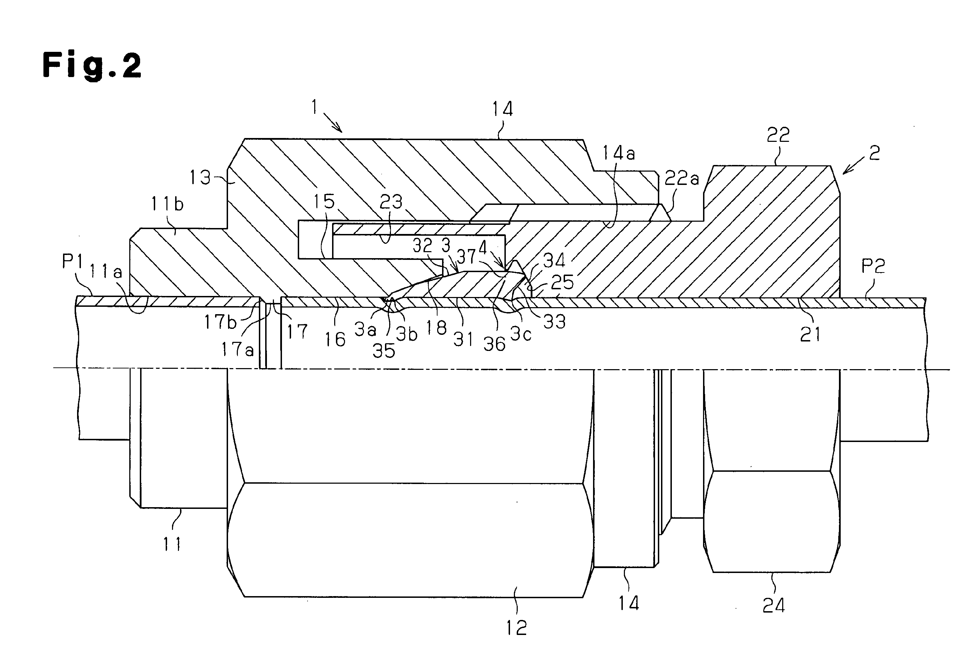

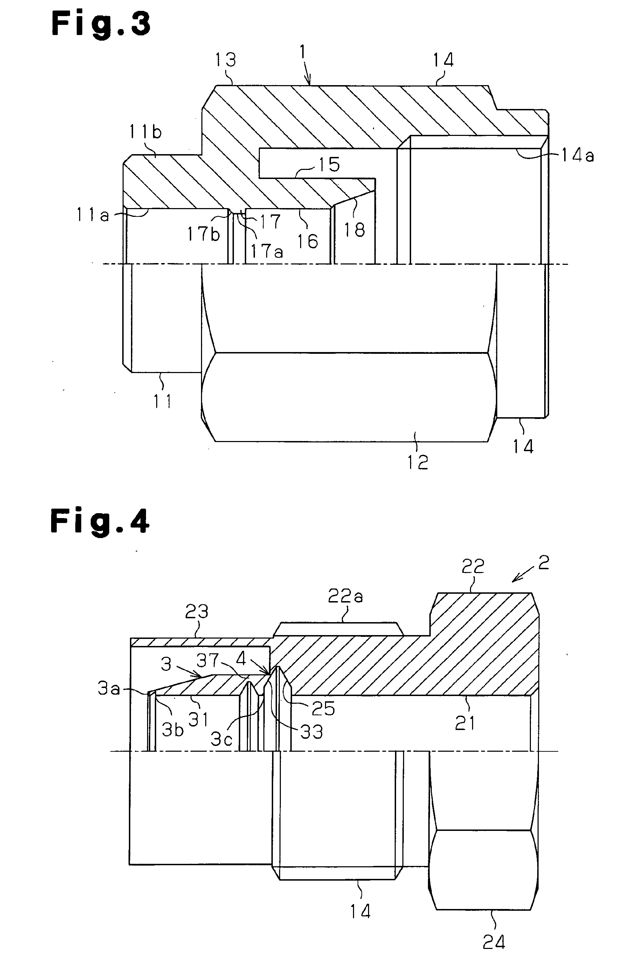

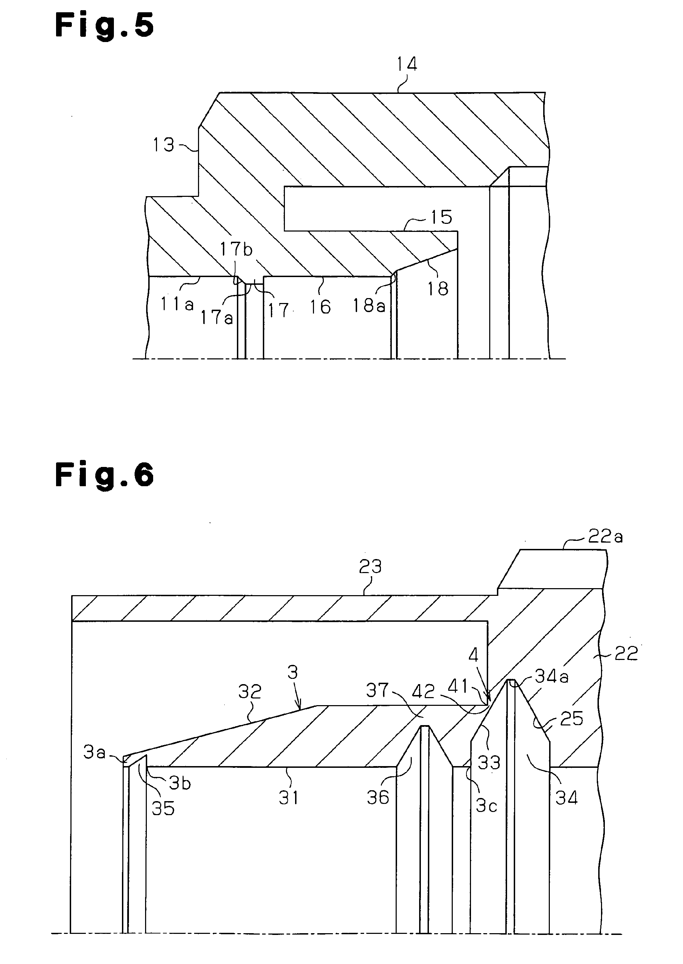

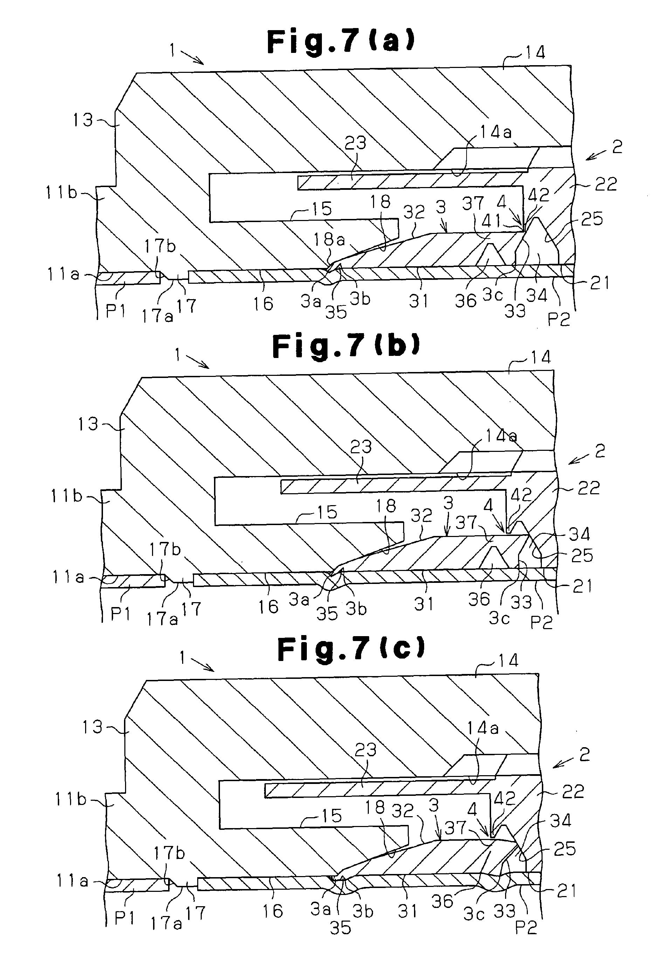

A pipe coupling according to a first embodiment will now be described with reference to Figs. 1 to 9. The pipe coupling of the first embodiment can be used in a refrigerant circuit, a water supply circuit, and hot water circuit in a refrigeration device or a heat pump type water heating device. Fig. 1 is a partial cross-sectional view of a bite type pipe coupling, illustrating a state in which a ferrule contacts a cam surface after fastening is started. Fig. 2 is a partial cross-sectional view illustrating a state in which fastening of a connector pipe is completed. Fig. 3 is a partial cross-sectional view showing the coupling body, and Fig. 4 is a partial cross-sectional view showing a coupling member. Fig. 5 is an enlarged view showing a cam surface and its surroundings, and Fig. 6 is an enlarged view showing a ferrule and its surroundings. Figs. 7(a) to 7(c) are diagrams showing procedure for connecting pipes.

As shown in these drawings, the bite type pipe coupling includes a coupling body 1, a coupling member 2, and a ferrule 3. The coupling body 1 is attached to an apparatus to which a connector pipe P2 is connected. The coupling member 2 is arranged around the connector pipe P2 and coupled to the coupling body 1. The ferrule 3 is formed integrally with the coupling member 2. In the following, the side corresponding to the coupling body 1, for example, the left side in Fig. 1 is referred to as the front, and the side corresponding to the coupling member 2, for example, the right side in Fig. 1 is referred to as the rear.

As shown in Figs. 1 to 3, in the coupling body 1, a socket portion 11 having an insertion port 11a is formed at an end opposite to the coupling member 2. The apparatus-side pipe P1 is inserted into and brazed to the insertion port 11a. A base portion 13 and an internal thread cylindrical portion 14 are formed on a side of the socket portion 11 that corresponds to the coupling member 2. A nut portion 12 is formed on the outer circumference of the base portion 13. When the coupling member 2 is fastened, the nut portion 12 is grasped by a fastening tool. An internal thread 14a is formed on the inner circumferential surface of the internal thread cylindrical portion 14. The internal thread 14a serves as a threaded portion to which the coupling member 2 is threaded. The nut portion 12 is continuously formed from the base portion 13 to the outer circumference of the internal thread cylindrical portion 14.

In the socket portion 11, the outer circumference of the entrance of the insertion port 11a is formed smaller than the outer circumference of the base portion 13, so that a thin wall portion 11 b is formed. The thin wall portion 11 b is formed in a range from the entrance of the insertion port 11a to the vicinity of the inner end of the insertion port 11a. The vicinity of the inner end of the insertion port 11a refers to a position where the distance from the inner end of the insertion port 11a is shorter than the distance from the entrance of the insertion port 11a. Preferably, the vicinity of the inner end of the insertion port 11 a is a position shown in Fig. 1, that is, a position close to the inner end of the insertion port 11 a.

The coupling body 1 includes a shaft portion 15 located in the base portion 13. The shaft portion 15 projects from an end face facing the coupling member 2 into the internal thread cylindrical portion 14. An insertion port 16 is formed in a center portion from the shaft portion 15 to the base portion 13. When connecting pipes, the connector pipe P2 is inserted in the insertion port 16. A step 17 is formed between the insertion port 11a and the insertion port 16. The step 17 projects from the inner circumferential surface of the insertion ports 11a, 16. The diameter of the inner circumferential surface of the step 17 is smaller than the diameters of the insertion ports 11a, 16. Thus, when inserted in the insertion ports 11a, 16, the apparatus-side pipe P1 and the connector pipe P2 are retained at predetermined positions by contact between the distal ends and the side surfaces of the step 17. The apparatus-side pipe P1 has the same pipe diameter as the connector pipe P2.

A cam surface 18 is formed at the entrance of the insertion port 16. The cam surface 18 is continuous at the front end to the insertion port 16, and is formed like a cone with the diameter increasing toward the rear end. The inclination angle of the cam surface 18 relative to the axis of the pipe coupling is greater than the inclination angle of a tapered surface 32 at the tip end of a ferrule 3, which will be discussed below. The inclination angle of a center portion 18a of the cam surface 18 is even greater than the inclination angle of the cam surface 18 in portions other than the center portion 18a. This allows the tip end of the ferrule 3 to easily bite into the connector pipe P2.

As shown in Figs. 1, 2, 4, and 6, the coupling member 2 includes a base portion 22 having a through hole 21 extending along the axis. The connector pipe P2 is received by and extends through the through hole 21. A protective cylindrical portion 23 is formed at an end of the base portion 22 that faces the coupling body 1. The protective cylindrical portion 23 protects the outer circumference of the ferrule 3. An external thread 22a is formed on the outer circumference of the base portion 22 that is continuous to the protective cylindrical portion 23. The external thread 22a serves as a thread portion that is threaded to the coupling body 1. A hold portion 24 is formed at a rear portion of the base portion 22. The hold portion 24 is shaped like a hexagonal nut and has a relatively large size so that it can be grasped with a fastening tool.

In the configuration described so far, the apparatus-side pipe P1 and the connector pipe P2 are formed by copper pipes, and the coupling body 1 and the coupling member 2 are made of a brass material. These materials are optimal for refrigeration devices and have broad utility.

The coupling member 2 has the annular ferrule 3, which projects forward from the base portion 22 in the protective cylindrical portion 23, that is, toward the coupling body 1. The axial hole of the ferrule 3 is a through hole 31, through which the connector pipe P2 extends. The diameter of the through hole 31 is substantially the same as the diameter of the through hole 21 formed at the axes of the insertion port 16 and the base portion 22. As illustrated in Figs. 4 and 6, the ferrule 3 is coupled to the base portion 22 at a thin portion 4 that extends radially at the rear end of the ferrule 3, so that the ferrule 3 is integrated with the coupling member 2.

When viewed as a cross-section along the axis, the ferrule 3 has a rear portion of a substantially constant thickness. As shown, for example, in Fig. 6, the ferrule 3 also has a tapered surface 32 on the outer circumference of the front portion so that the thickness decreases toward the front end. The inclination angle of the tapered surface 32 is slightly less than the inclination angle of the cam surface 18. A rear end face 33 of the ferrule 3 faces a pressing surface 25 formed on the base portion 22 with a space 34 in between, which space 34 is formed by recessing the inner circumference of the base portion 22 radially outward. As shown in Fig. 6, the cusp of the space 34, that is, the outer circumferential portion is formed to have a V-shape, and the inner circumference of the space 34 is formed to have front and rear end faces that are perpendicular to the axis. A short linear portion 34a is formed in the cusp of the space 34. The linear portion 34a extends along the axis of the base portion 22.

The outer circumferential surface of the rear portion of the ferrule 3 and the front face of the thin portion 4 are connected to each other to form a substantially right angle in the cross section along the axial direction. The right angle portion forms an incision 41, which is shaped like an edge in a cross sectional shape formed by the rear end face 33 ranging from the ferrule 3 to the thin portion 4, the outer circumferential surface having the cylinder of the ferrule 3, and the front surface of the thin portion 4. The incision 41 forms a thinnest portion 42 at which the thickness is locally reduced. Thus, when an axial force acts on the coupling member 2, the stress concentrates on the thinnest portion 42.

A first notch 35 is formed in the inner circumferential surface in the vicinity of the tip end of the ferrule 3, and a second notch 36 is formed in the inner circumferential surface near the rear end of the ferrule 3. The first notch 35 facilitates deformation of the distal end portion 3a of the first notch 35. A cross-sectional shape of the first notch 35 along the axial direction is a right triangle, in which the rear incision surface extends perpendicular to the axis. At the stage of manually fastening the coupling member 2, the distal end portion 3a of the first notch 35 is held between the connector pipe P2 and the insertion port 16 in a wedge-like manner, so that the connector pipe P2 is temporarily fixed. The intersection between the rear incision surface of the first notch 35 and the inner circumferential surface of the ferrule 3 form an edge portion 3b. The edge portion 3b allows the ferrule 3 to bite in the connector pipe P2 at the tip end (see Fig. 7(c)).

The second notch 36 is substantially V-shaped, and is formed as a trapezoid having the short side at a position corresponding to the outer circumference. That is, the second notch 36 has the same shape as the cusp of the space 34. In other words, the space 34 is equivalent to the second notch 36 with surfaces perpendicular to the axis extending from the ends of the V-shape. Since the second notch 36 is formed to have a substantially V-shaped cusp, an annular thin portion 37 (see Fig. 6) is formed between the side of the second notch 36 facing the outer circumference (that is, the cusp) and the outer circumferential surface of the rear portion of the ferrule 3. Since the annular thin portion 37 is formed by the second notch 36, the edge portion 3b in the vicinity of the ferrule 3 is deformed to bite into the connector pipe P2, and an edge portion 3c forming the inner edge of the rear end face 33 is deformed to bite into the connector pipe P2. Therefore, the entire ferrule 3 is deformed around the second notch 36 (refer to Figs. 2 and 7(c)). In this manner, in addition to the edge portion 3b at the distal end portion, the edge portion 3c at the rear end bites into the connector pipe P2. This prevents the connector pipe P2 from coming off and vibration of the connector pipe P2 from being transmitted to the edge portion 3b. Accordingly, the sealing performance and pipe retaining performance of the edge portion 3b at the tip end are maintained at a high level.

Next, a method for connecting pipe using the bite type pipe coupling described above will now be described with reference to Fig. 7. Prior to connecting of the connector pipe P2 to the coupling body 1, the coupling body 1 is attached to the apparatus-side pipe P1. Since the coupling body 1 is formed of brass, flux is applied to the inner circumferential surface of the insertion port 11 a. Then, the apparatus-side pipe P1 is inserted into the insertion port 11 a. The insertion continues until the distal end of the apparatus-side pipe P1 contacts the step 17. The insertion port 11 a is heated and brazing filler metal is poured into the entrance of the insertion port 11a. In the brazing, since the thin wall portion 11b in the outer circumference of the insertion port 11a is formed to have a length from the entrance of the insertion port 11a to the vicinity of the inner end of the insertion port 11a, the brazing filler metal easily flows to the vicinity of the distal end of the apparatus-side pipe P1. This strengthens the brazing. Since the thin wall portion 11 b is formed not to reach the inner end of the insertion port 11 a, the flux does not scatter over the insertion port 16, which faces the coupling member 2, and the brazing filler metal does not flow into the insertion port 16.

Next, in connecting the connector pipe P2 using the bite type pipe coupling, the connector pipe P2 is inserted into the through hole 21 of the coupling member 2, and the coupling member 2 is fitted about the connector pipe P2. The distal end of the connector pipe P2 is passed through the through hole 31 of the ferrule 3 and inserted into the insertion port 16. With the distal end contacting the step 17, the coupling member 2 is threaded to the coupling body 1. Fig. 1 shows a state where the distal end portion 3a of the ferrule 3 contacts the cam surface 18.

From this state, the coupling member 2 is further fastened manually, so that the distal end portion 3a of the ferrule 3 is pressed into the space between the connector pipe P2 and the insertion port 16. Accordingly, the connector pipe P2 is temporarily fixed. This state is illustrated in Fig. 7(a).

Thereafter, since the tapered surface 32 rearward of the first notch 35 in the ferrule 3 contacts the cam surface 18, a great rotation torque is required. Therefore, in the subsequent steps, a fastening tool is used for fastening the coupling member 2 to the coupling body 1. As in the case of the prior art, the coupling member 2 is fastened with the distal end portion of the ferrule 3 pressed against the cam surface 18, and a forward force in the axial direction acts on the thin portion 4. At this time, stress concentrates on the intersection of the outer circumferential surface of the ferrule 3 and the front face of the thin portion 4, that is, on the thinnest portion 42 having the incision 41 (refer to Fig. 7(a)), and the thin portion 4 breaks at the thinnest portion 42. Accordingly, the outer edge of the rear end face 33 contacts the pressing surface 25 (refer to Fig. 7(b)).

As described above, the ferrule 3 is separated from the coupling member 2, and the outer edge of the rear end face 33 is pressed by the pressing surface 25. Thereafter, the ferrule 3 acts as an independent ferrule 3. When the coupling member 2 is fastened further in the state where the outer edge of the rear end face 33 is pressed by the pressing surface 25, the pressing surface 25, which is inclined rearward toward the axis of the base portion 22, allows parts of the ferrule 3 forward and rearward of the second notch 36 to be easily bent toward the axis. Therefore, in the ferrule 3, the front portion of the second notch 36 is inclined such that the edge portion 3b bites into the connector pipe P2 about the second notch 36, and the rear portion of the second notch 36 is inclined such that the edge portion 3c of the inner end of the rear end face 33 bites into the connector pipe P2 about the second notch 36 (see Fig. 7(c)).

Further, the rear portion of the ferrule 3 is deformed to be inclined about the second notch 36, so that the edge portion 3c bites into the connector pipe P2. The shape of the second notch 36 is determined such that, when the amount of bite reaches a proper value, the front face and the rear face forming the second notch 36 contact each other substantially entirely. As shown in the enlarged view of Fig. 6, this shape substantially corresponds to a V-shape, which is the same shape as the cusp of the space 34. Specifically, the short linear portion 36a is formed at the cusp of the second notch 36. That is, the second notch 36 is defined as a trapezoid. Accordingly, in the ferrule 3 of the first embodiment, after the front and rear end faces, which define the second notch 36, contact each other substantially along the entire area, the inclination about the second notch 36 is limited so that the edge portion 3c is prevented from biting in excessively.

When the bite amount of the edge portion 3b at the tip end of the ferrule 3 and the bite amount of the edge portion 3c at the rear end of the ferrule 3 reach predetermined levels, the rotation torque for fastening the coupling member 2 reaches a predetermined value, so that the connection of the connector pipe P2 is completed (see Fig. 2).

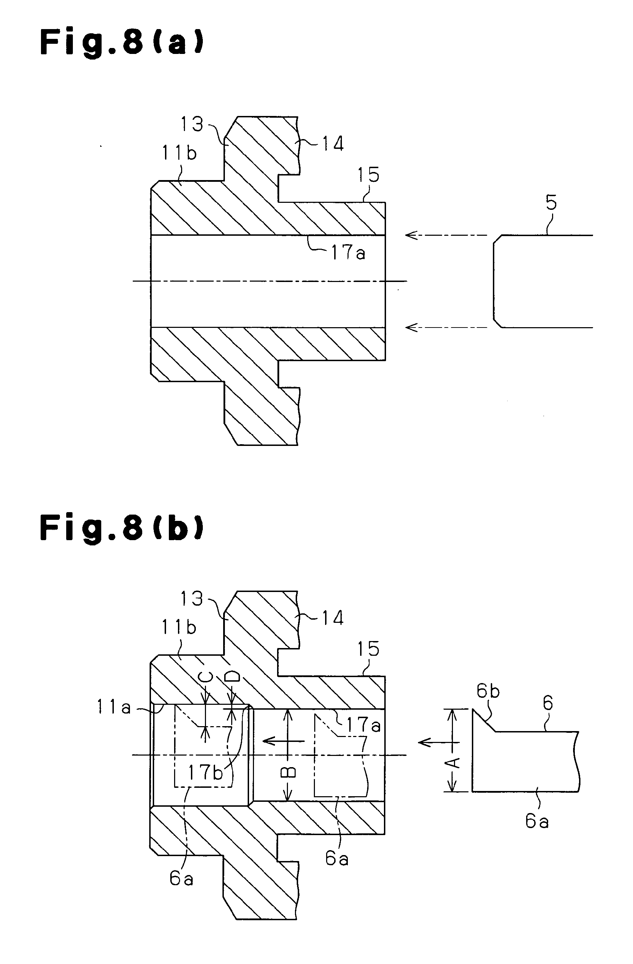

Next, a method for machining the insertion ports 11a, 16 and the step 17 of the above described coupling body will be described. In the machining procedures, a cutting tool 5 for forming pilot holes, such as a drill, is used to form a pilot hole 17a having a diameter equal to the inner diameter of the step 17 in the center portion of the coupling body 1 as shown in Fig. 8(a). Next, as shown in Fig. 8(b), a boring bar finishing tool 6 is inserted into the pilot hole 17a from an end facing the coupling member to machine finish a portion corresponding to the insertion port 11 a. The insertion port 11 a is thus formed. The boring bar finishing tool 6 has a tip 6b, which extends outward from a shank 6a.

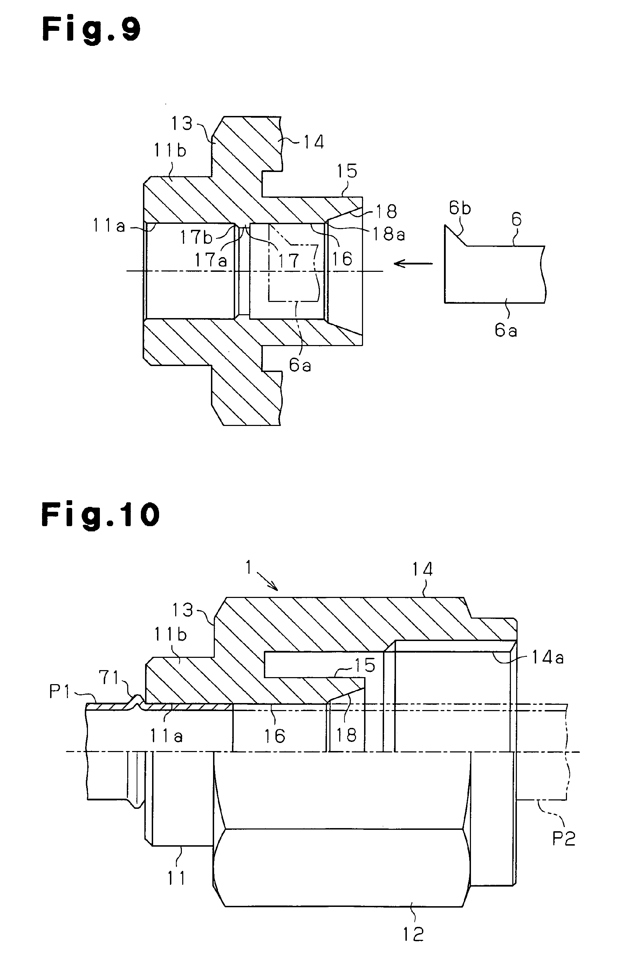

Then, as shown in Fig. 9, the boring bar finishing tool 6 is pulled back to machine finish a portion corresponding to the insertion port 16. This leaves a portion of the surface of the previously machined pilot hole 17a between the insertion port 11a and the insertion port 16. The left portion corresponds to the step 17. The step 17 is formed in this manner, the height between the step 17 and the inner circumferential surface of the insertion port 11a is in a range from 0.1 to 0.5 mm. Machining of the cam surface 18 is performed after the insertion port 11a and the insertion port 16 are machined. As described above, the insertion ports 11 a, 16 are formed from the same direction. In this case, the following requirements need to be satisfied. That is, the inner diameter B of the pilot hole 17a for forming the step 17 is greater than the total height A of the boring bar finishing tool 6 including the shank 6a and the tip 6b. The height D of the step 17 is smaller than the height C of the tip 6b of the boring bar finishing tool 6. Further, the shank 6a of the boring bar finishing tool 6 has a cross-sectional area that withstands boring bar machine finishing.

A side surface 17b of the step 17 that faces the insertion port 11 a is inclined so that its diameter increases toward the entrance of the insertion port 11. The inclined surface has a shape that corresponds to the inclined surface of the tip 6b of the boring bar finishing tool 6.

The bite type pipe coupling according to the present embodiment has the following advantages.
(1) The thin wall portion 11b is formed in the outer circumferential wall of the entrance of the insertion port 11a, into which the apparatus-side pipe P1 is inserted. The thin wall portion 11 b extends from the entrance of the insertion port 11 a to the vicinity of the inner end of the insertion port 11a. Therefore, compared to the conventional bite type pipe coupling, the thermal capacity of the wall of the insertion port 11 a is small in an area including the vicinity of the distal end of the apparatus-side pipe P1. As a result, when brazing is performed, brazing filler metal smoothly flows to the vicinity of the distal end of the apparatus-side pipe P1, which ensures a strong brazing.
(2) The thin wall portion 11 b extends from the entrance of the insertion port 11 a to a position near the inner end of the insertion port 11a, that is, to a position that is closer to the entrance than the inner end of the insertion port 11 a and in the vicinity of the inner end of the insertion port 11a. Therefore, it was experimentally proved that the height of the step 17 formed at the inner end of the insertion port 11 a may be small, or the step 17 may be omitted. This is because since the thermal capacity of the wall is sharply increased from the thin wall portion 11 b to the base portion 13, which has a great thickness, inflow of the brazing filler metal and scattering of flux are prevented. Therefore, even if the height of the step 17 is formed to be small as in the present embodiment, the structure does not hinder the sealing of the connector pipe P2, for example, the sealing performance of the cam surface 18.
(3) In the present embodiment, since the positions of the distal ends of the apparatus-side pipe P1 and the connector pipe P2 are determined by the step 17, the brazing of the apparatus-side pipe P1 and the biting connection of the connector pipe P2 are reliably executed.
(4) The pilot hole 17a having a diameter corresponding to the diameter of the inner circumferential surface of the step 17 is formed in the center portion of the coupling body 1 of the present embodiment. Thereafter, the insertion port 11 a for the apparatus-side pipe P1 and the insertion port 16 for the connector pipe P2 are machined. The machining of the insertion ports 11a, 16 are executed only by machine finishing after machining the pilot hole 17a. Machine finishing of the insertion ports 11a, 16 forms a step 17 having a small height without applying further machining. This allows reasonable machining procedure to be carried out, thereby reducing the costs.
(5) The height between the step 17 and the inner circumferential surface of the insertion port 11a is in a range from 0.1 to 0.5 mm. This range is believed to be optimal in view of, for example, the grinding dimensions of a boring bar finishing tool, the requirement of the height of the step in machining from one side, and the preservation of the functions of the step.
(6) Since the height of the step 17 of the present embodiment is small, the insertion port 11a for the apparatus-side pipe P1 and the insertion port 16 for the connector pipe P2 both can be machined from the same direction. This further reduces the costs of the coupling body 1.
(7) In the present embodiment, the side surface 17b of the step 17, which faces the insertion port 11 a for the apparatus-side pipe P1, has a shape that corresponds to the tip 6b of the boring bar finishing tool 6 used for machine finishing the insertion port 11a. Therefore, the machining of the side surface 17b, which is an inclined surface, is performed at the same time as the machining of the inner circumferential surface of the insertion port 11a. This also contributes to the cost reduction.
(9) Since the apparatus-side pipe P1 is made of copper, and the coupling body 1 is made of brass, a predetermined strength is achieved by the brazing with no difficulty.
(8) The ferrule 3 of the present embodiment has the second notch 36 dividing the ferrule 3 into the front portion and the rear portion in the vicinity of the rear end of the inner circumferential surface. This allows the front portion and the rear portion of the ferrule 3 with respect to the second notch 36 to be bent toward the center. Accordingly, the edge portion 3b at the front end and the edge portion 3c at the rear end readily bite into the surface of the connector pipe P2.
(9) The first notch 35 is formed at the front end of the ferrule 3, and the distal end portion 3a of the first notch 35 is manually fastened to the coupling member 2. This presses the distal end portion 3a into the space between the outer circumferential surface of the connector pipe P2 and the inner circumferential surface of the insertion port 16. Therefore, the bite type pipe coupling is configured such that, during fastening, the coupling member 2 is manually fastened so that the distal end portion 3a of the ferrule 3 is pressed into the space between the outer circumferential surface of the connector pipe P2 and the inner circumferential surface of the insertion port 16, thereby temporarily fixing the connector pipe P2. As a result, the connector pipe P2 is temporarily fixed before the coupling member 2 has to be fastened using a fastening tool. This simplifies the pipe connecting operation.
(10) The protective cylindrical portion 23 protects the outer circumference of the ferrule 3 that projects forward from the base portion 22 of the coupling member 2. This prevents the ferrule 3 from being damaged when the components are stored before the pipe is joined.
(11) The bite type coupling of the present embodiment can be used in a refrigerant circuit, a water supply circuit, and a hot water supply circuit of refrigeration devices and water heating devices, and contributes to the cost reduction of refrigeration devices and water heating devices.

### (Second Embodiment)

In the first embodiment, the step 17 is formed as means for determining the positions of the apparatus-side pipe P1 and connector pipe P2. In contrast, position determining means for the second embodiment is formed by other members.

That is, according to the second embodiment, a protrusion 71 is formed as position determining means on the outer circumference of the apparatus-side pipe P1 as shown in Fig. 10. The protrusion 71 may be an annular projection on the outer circumference of the apparatus-side pipe P1, or may be formed by a plurality of discontinuous protrusions. The bite type pipe coupling according to the second embodiment has such a protrusion 71 but has no step 17 as in the first embodiment. In the second embodiment, the insertion port 11a for the apparatus-side pipe P1 and the insertion port 16 for the connector pipe P2 are continuous to each other and have the same diameter. Therefore, the insertion ports 11 a, 16 can be easily machined from the same direction. Since the apparatus-side pipe P1 is brazed to the insertion port 11 a before the connector pipe P2 is inserted into the insertion port 16, the position of the connector pipe P2 is determine by causing the distal end of the connector pipe P2 to contact the distal end of the brazed apparatus-side pipe P1.

### (Third Embodiment)

In the first embodiment, the ferrule 3 is formed in the coupling member 2. In contrast, a ferrule is attached to a coupling body in a third embodiment.

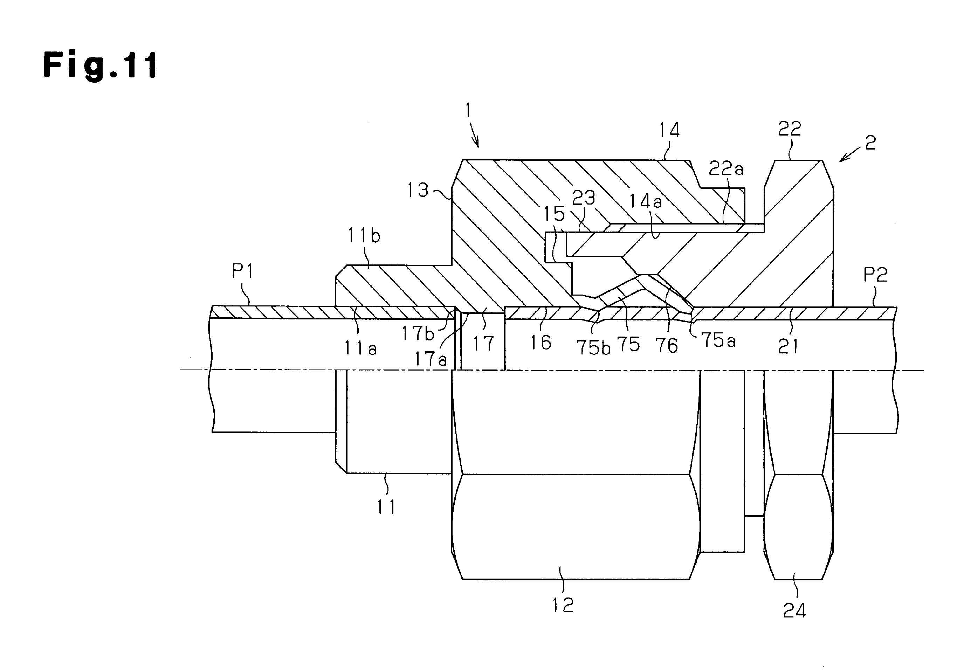

In a bite type pipe coupling according to the third embodiment, a shaft portion 15 extending from a base portion 13 of the coupling body 1 is shorter than the shaft portion 15 of the first embodiment. The shaft portion 15 of the third embodiment has a ferrule 75 at the distal end. The ferrule 75 is substantially inverted V-shaped in the cross-section along the axis. On the other hand, a protective cylindrical portion 23 of a coupling member 2 is shorter than the protective cylindrical portion 23 of the first embodiment. Further, the coupling member 2 has a cam surface 76 formed on the end that faces the coupling body 1 in the through hole 21 in the center. Fig. 11 shows a state in which the bite type pipe coupling of the third embodiment is fastened. As shown in Fig. 11, the ferrule 75 is formed integrally with the coupling body 1, and is designed to be tightly held between the coupling body 1 and the coupling member 2 so as to bite into the connector pipe P2.

In the conventional bite type pipe coupling, if the thin wall portion 101 a is extended beyond the end of the insertion port 107 and the height of the step 109 is made smaller, the brazing performance is improved. However, flux used in brazing scatters from the insertion port 107 for the apparatus-side pipe 106 to the insertion port 108 for the connector pipe 102, and collects on the cam surface 105. The collected flux hardens and hampers the sealing performance of the cam surface 105. In contrast, in a bite type pipe coupling in which a ferrule is formed in the coupling body and a cam surface is formed on the coupling member, if flux scatters from the insertion port for the apparatus-side pipe to the insertion port for the connector pipe, the edge portion of the ferrule is contaminated and the sealing performance of the edge portion is likely to be hampered.

However, in the third embodiment, the thin wall portion 11 b is formed in the outer circumferential wall at the entrance of the insertion port 11a, into which the apparatus-side pipe P1 is inserted. The thin wall portion 11 b is formed in a range from the entrance of the insertion port 11 a to a position that is located closer to the entrance than the inner end of the insertion port 11 a and is located in the vicinity of the inner end. Therefore, in the bite type pipe coupling according to the third embodiment, the thin wall portion 11 b extends to the distal end of the apparatus-side pipe P1, which allows the apparatus-side pipe P1 to be reliably brazed. Also, the thin wall portion 11 b is formed in a range from the entrance of the insertion port 11a to a position that is located closer to the entrance than the inner end of the insertion port 11a and is located in the vicinity of the inner end of the insertion port 11a. Therefore, although no step 17 as in the first embodiment is provided, flux used in brazing does not scatter from the insertion port 11 a of the apparatus side pip P1 to the insertion port 16 for the connector pipe P2. The edge portions 75a, 75b of the ferrule 75 are therefore not contaminated.

### (Modifications)

(1) In the illustrated embodiments, the ferrules 3, 75 are integrally formed with the coupling member 2 or the coupling body 1. However, as in the prior art, an independent ferrule may be used in place of the integrated ferrules 3, 75.
(2) The ferrule 3 includes the space 34, the first notch 35, and the second notch 36. However, the ferrule 3 may only have the space 34 and the second notch 36 or only have the space 34 and the first notch 35. Further, a ferrule without the first notch 35 and the second notch 36 may be used.
(3) In the illustrated embodiments, a threading structure is employed in which the internal thread 14a is formed on the coupling body 1, and the external thread 22a is formed on the coupling member 2. However, instead of the threading structure of a coupling body and a coupling member, an external thread may be formed on the coupling member 1 and an internal thread may be formed on the coupling member 2 as in the prior art. In this case, the concrete is not limited to those in the prior art.
(4) In the illustrated embodiments, the apparatus-side pipe P1 and the connector pipe P2 have the same size. However, the size of the connector pipe P2 may be greater than the apparatus-side pipe P1. In this case, the height of the connector pipe P2 at the insertion port 16 is increased in the first and third embodiments. In the second embodiment, a step is formed at the inner end of the insertion port 16 for the connector pipe P2. in this case, the position of the connector pipe P2 may be determined by the step.

### INDUSTRIAL APPLICABILITY

The pipe couplings of the present invention are used as pipe couplings such as flare type pipe couplings and bite type pipe couplings. These pipe couplings may be applied to refrigerant piping in which copper pipes are used, for example, refrigerant devices such as air conditioners and heat pump type hot water supply devices. The pipe couplings may also be applied to water piping in which steel pipes, stainless steel pipes, or plastic pipes are used, for example, water supply devices and hot water supply devices. Further, the pipe couplings may be applied to other uses.

## Claims

1. A bite type pipe coupling **characterized by** a coupling body, a coupling member, a ferrule, and a cam surface, the coupling body being attached to an apparatus to which a connector pipe is connected, the coupling member being arranged around the connector pipe and coupled to the coupling body, the ferrule being tightly held between the coupling body and the coupling member, the cam surface causing a tip end of the ferrule to bite into the connector pipe,
wherein, in a center portion of the coupling body, an insertion port for receiving the connector pipe is formed at an end that faces the coupling member, and, in the center portion, an insertion port is formed at an end located opposite to the end that faces the coupling member, an apparatus-side pipe being inserted into and brazed to the insertion port,
wherein a thin wall portion is formed in an outer circumferential wall portion of the entrance of the insertion port for receiving the apparatus-side pipe, the outer diameter of the thin wall portion being smaller than that of the coupling body, and
wherein the thin wall portion is formed in a range extending from the entrance of the insertion port to a position that is located closer to the entrance than the inner end of the insertion port and is located in the vicinity of the inner end.

2. The bite type pipe coupling according to claim 1, **characterized in that** the apparatus-side pipe and the connector pipe are connected to the insertion ports by a predetermined insertion dimension by means for determining the position of the connection.

3. The bite type pipe coupling according to claim 2, **characterized in that** a step is formed on the inner circumferential surface of the coupling body between the insertion port for receiving the apparatus-side pipe and the insertion port for receiving the connector pipe, the step projecting radially inward so that the apparatus-side pipe and the connector pipe contact the step from both sides,
wherein the height between the step and the inner circumferential surface of each insertion port is smaller than the thickness of the pipes.

4. The bite type pipe coupling according to claim 3, **characterized in that** a pilot hole having the same diameter as the inner diameter of the step is formed in the center portion of the coupling body prior to the machining of the insertion ports, the insertion ports being formed by machine finishing the inner circumferential surface of the pilot hole using a boring bar finishing tool,
wherein the step is formed by a portion of the inner circumferential surface of the pilot hole that has not been subjected to the machine finishing by the boring bar finishing tool.

5. The bite type pipe coupling according to claim 4, **characterized in that** the inner diameter of the step is greater than the total height of the boring bar finishing tool including the shank and the tip,
wherein the height between the step and the inner circumferential surface of each insertion port is smaller than the height of the tip of the boring bar finishing tool, and
wherein the shank of the boring bar finishing tool has a cross-sectional area that secures a strength withstanding machine finishing using a boring bar tool.

6. The bite type pipe coupling according to claim 4 or 5, **characterized in that** the height between the step and the inner circumferential surface of the insertion port is between 0.1 mem to 0.5 mm.

7. The bite type pipe coupling according to claim 6, **characterized in that** a side surface of the step that faces the insertion port receiving the apparatus-side pipe is formed into an inclined surface of which the diameter increases toward the entrance of the insertion port, and
wherein the side surface is formed into a shape that corresponds to the inclined surface of the tip of the boring bar finishing tool.

8. The bite type pipe coupling according to claim 2, **characterized in that** a projection serving as the position determining means is formed on the outer circumference of the apparatus-side pipe, wherein the projection contacts the insertion port receiving the apparatus-side pipe, so that the insertion dimension of the apparatus-side pipe becomes a predetermined dimension.

9. The bite type pipe coupling according to any one of claims 1 to 8, **characterized in that** the apparatus-side pipe is a copper pipe, and the coupling body pipe is made of brass.

10. A refrigeration device being **characterized in that** the bite type pipe coupling according to any one of claims 1 to 9 is used in a refrigerant circuit, in a water supply circuit, or both in the refrigerant circuit and the water supply circuit.

11. A water heating device being **characterized in that** the bite type pipe coupling according to any one of claims 1 to 9 is used in a hot-water supply circuit, in a water supply circuit, or both in the hot-water supply circuit and the water supply circuit.
